# EUROPEAN PATENT APPLICATION

(11) **EP 4 797 181 A1**
(43) Date of publication of application: **26.08.2026**
(21) Application number: 26159076.4
(22) Date of filing: 17.02.2026
(51) Int. Cl.: G06Q 20/22, G06Q 20/34, G06Q 20/38

(54) **METHOD AND APPARATUS FOR EXECUTING DEDUCTION SERVICE, STORAGE MEDIUM, AND ELECTRONIC DEVICE**

(30) Priority: 19.02.2025 CN 202510186576
(71) Applicant: Alipay (Hangzhou) Digital Service Technology Co., Ltd., Hangzhou, Zhejiang 310000 (CN)
(72) Inventor: MEI, Long, Hangzhou, Zhejiang, 310000 (CN)
(74) Representative: Winter, Brandl - Partnerschaft mbB

(57) **Abstract**

This disclosure discloses a method and an apparatus for executing a deduction service, a storage medium, and an electronic device. In the method for executing a deduction service provided in this disclosure, a deduction request sent by a near field communication (NFC) card reader is received, wherein the deduction request is sent by the NFC card reader when the NFC card reader detects an NFC card of a target user, and the deduction request includes at least payment information and a key stored in the NFC card; the key is decrypted, to obtain a deduction agreement corresponding to the key, wherein the deduction agreement is signed with a guardian user in advance, the key is generated based on the deduction agreement in advance, and the guardian user has a guardian relationship with the target user; and the deduction service is executed based on the payment information and the deduction agreement.

## Description

### TECHNICAL FIELD

This disclosure relates to the field of computer technologies, and in particular, to a method and an apparatus for executing a deduction service, a storage medium, and an electronic device.

### BACKGROUND

Nowadays, mobile payment technologies have been well developed. In comparison with conventional cash payment, mobile payment is more secure, more convenient, and faster, and allows a user to complete all fund management operations using only one mobile device, thereby bringing great convenience to daily lives of people.

However, particular groups such as the elderly and children who do not know how to operate a personal mobile device or do not own a personal mobile device cannot enjoy the convenience brought by mobile payment. In addition, in scenarios such as quick response (QR) code payment, these groups may become targets of malicious scams due to a lack of knowledge and security awareness regarding mobile payment, resulting in financial losses.

Therefore, how to help the particular groups enjoy convenience of mobile payment while protect their interests is an issue to be urgently resolved.

### SUMMARY

This disclosure provides a method and an apparatus for executing a deduction service, a storage medium, and an electronic device, to at least partially resolve the foregoing problem in the existing technology.

The following technical solutions are used in this disclosure.

This disclosure provides a method for executing a deduction service. The method is applied to a service platform, and includes:
receiving a deduction request sent by a near field communication (NFC) card reader, wherein the deduction request is sent by the NFC card reader when the NFC card reader detects an NFC card of a target user, and the deduction request includes at least payment information and a key stored in the NFC card;
decrypting the key to obtain a deduction agreement corresponding to the key, wherein the deduction agreement is signed with a guardian user in advance, the key is generated based on the deduction agreement in advance, and the guardian user has a guardian relationship with the target user; and
executing the deduction service based on the payment information and the deduction agreement.

Optionally, signing a deduction agreement with a guardian user in advance specifically includes:
determining, in response to receiving a signing request initiated by the guardian user, a deduction account selected by the guardian user and a deduction limit set by the guardian user;
generating a deduction agreement based on the deduction account and the deduction limit, and sending the deduction agreement to the guardian user; and
signing the deduction agreement with the guardian user in response to that the guardian user determines to sign the deduction agreement.

Optionally, generating a key based on the deduction agreement in advance specifically includes:
creating an agreement number corresponding to the deduction agreement; and
performing encryption processing on the agreement number, to obtain a key of the agreement number.

Decrypting the key to obtain a deduction agreement corresponding to the key specifically includes:
decrypting the key to obtain the agreement number; and
determining the deduction agreement corresponding to the agreement number.

Optionally, the payment information includes at least a merchant account and a payment amount.

Executing the deduction service based on the payment information and the deduction agreement specifically includes:
determining the deduction account included in the deduction agreement; and
completing the deduction service based on the deduction account, the payment amount, and the merchant account.

Optionally, completing the deduction service based on the deduction account, the payment amount, and the merchant account specifically includes:
determining the deduction limit included in the deduction agreement; and
canceling the deduction service when the payment amount is greater than the deduction limit; or
transferring the payment amount from the deduction account to the merchant account when the payment amount is not greater than the deduction limit, to complete the deduction service.

This disclosure provides a method for executing a deduction service. The method is applied to an NFC card reader, and includes:
in response to detecting an NFC card of a target user, reading a key stored in the NFC card; and
sending payment information and the key to a service platform, to enable the service platform to decrypt the key, obtain a deduction agreement corresponding to the key, and execute the deduction service based on the deduction agreement, wherein the deduction agreement is signed by the service platform with a guardian user in advance, and the guardian user has a guardian relationship with the target user.

This disclosure provides a method for manufacturing an NFC card. The NFC card is configured to enable a target user to perform mobile payment by using the method for executing a deduction service provided in this disclosure. The method includes:
signing a deduction agreement with a guardian user in response to receiving a signing request initiated by the guardian user, wherein the guardian user has a guardian relationship with the target user;
generating a key based on the deduction agreement; and
writing the key into an NFC chip, and manufacturing the NFC card by using the NFC chip.

This disclosure provides a system for executing a deduction service. The system includes an NFC card reader and a service platform.

The NFC card reader is configured to detect an NFC card of a target user, read a key included in the NFC card, and send payment information and the key to the service platform.

The service platform is configured to sign a deduction agreement with a guardian user in advance, generate the key based on the deduction agreement in advance, receive the payment information and the key that are sent by the NFC card reader, decrypt the key to obtain the deduction agreement, and execute the deduction service based on the payment information and the deduction agreement.

The guardian user has a guardian relationship with the target user, and information carried in the NFC card includes the key.

This disclosure provides an apparatus for executing a deduction service. The apparatus includes:
a receiving module configured to receive a deduction request sent by a near field communication (NFC) card reader, wherein the deduction request is sent by the NFC card reader when the NFC card reader detects an NFC card of a target user, and the deduction request includes at least payment information and a key stored in the NFC card;
a decryption module configured to decrypt the key to obtain a deduction agreement corresponding to the key, wherein the deduction agreement is signed with a guardian user in advance, the key is generated based on the deduction agreement in advance, and the guardian user has a guardian relationship with the target user; and
an execution module configured to execute the deduction service based on the payment information and the deduction agreement.

Optionally, the apparatus further includes a signing module configured to determine, in response to receiving a signing request initiated by the guardian user, a deduction account selected by the guardian user and a deduction limit set by the guardian user; generate a deduction agreement based on the deduction account and the deduction limit, and send the deduction agreement to the guardian user; and sign the deduction agreement with the guardian user in response to that the guardian user determines to sign the deduction agreement.

Optionally, the apparatus further includes a generation module configured to create an agreement number corresponding to the deduction agreement; and perform encryption processing on the agreement number, to obtain a key of the agreement number.

The decryption module is specifically configured to decrypt the key to obtain the agreement number; and determine the deduction agreement corresponding to the agreement number.

Optionally, the payment information includes at least a merchant account and a payment amount.

The execution module is specifically configured to determine the deduction account included in the deduction agreement; and complete the deduction service based on the deduction account, the payment amount, and the merchant account.

Optionally, the execution module is configured to determine the deduction limit included in the deduction agreement; and cancel the deduction service when the payment amount is greater than the deduction limit; or transfer the payment amount from the deduction account to the merchant account when the payment amount is not greater than the deduction limit, to complete the deduction service.

This disclosure provides an apparatus for executing a deduction service. The apparatus includes:
a reading module configured to read, in response to detecting an NFC card of a target user, a key stored in the NFC card; and
a sending module configured to send payment information and the key to a service platform, to enable the service platform to decrypt the key, obtain a deduction agreement corresponding to the key, and execute the deduction service based on the deduction agreement, wherein the deduction agreement is signed by a service platform with the guardian user in advance, and the guardian user has a guardian relationship with the target user.

This disclosure provides an apparatus for manufacturing an NFC card. The apparatus includes:
a response module configured to sign a deduction agreement with a guardian user in response to receiving a signing request initiated by the guardian user, wherein the guardian user has a guardian relationship with the target user;
a generation module configured to generate a key based on the deduction agreement; and
a manufacture module configured to write the key into an NFC chip, and manufacture the NFC card by using the NFC chip.

This disclosure provides a computer-readable storage medium. The storage medium stores a computer program. The computer program, when being executed by a processor, implements the method for executing a deduction service and/or the method for manufacturing an NFC card.

This disclosure provides an electronic device, including a memory, a processor, and a computer program stored in the memory and executable on the processor. The processor, when executing the program, implements the method for executing a deduction service and/or the method for manufacturing the NFC card.

At least one of the foregoing technical solutions used in this disclosure can achieve the following beneficial effects:
In the method for executing a deduction service provided in this disclosure, the deduction request sent by the near field communication (NFC) card reader is received, wherein the deduction request is sent by the NFC card reader when the NFC card reader detects the NFC card of the target user, and the deduction request includes at least the payment information and the key stored in the NFC card; the key is decrypted, to obtain the deduction agreement corresponding to the key, wherein the deduction agreement is signed with the guardian user in advance, the key is generated based on the deduction agreement in advance, and the guardian user has the guardian relationship with the target user; and the deduction service is executed based on the payment information and the deduction agreement.

When deduction is performed by using the method for executing a deduction service provided in this disclosure, after the guardian user signs the deduction agreement with a service provider, the target user may perform mobile payment by using the physical NFC card instead of an electronic device such as a mobile device, and the service provider operates the account of the guardian user to perform payment, thereby implementing deduction. Use of this method can help a particular group that has inconvenience in operating or holding a mobile device enjoy convenience of mobile payment, and can protect the particular group from being deceived by a malicious user or merchant for properties, so that experience of the particular group during daily consumption is greatly improved.

### BRIEF DESCRIPTION OF THE DRAWINGS

The accompanying drawings described herein are used to provide further understanding of this disclosure, and constitute a part of this disclosure. Illustrative embodiments of this disclosure and descriptions thereof are used to explain this disclosure and do not constitute an improper limitation to this disclosure. In the accompanying drawings:
FIG. 1 is a schematic flowchart of a method that is for executing a deduction service and that is applied to a service provider according to this disclosure;
FIG. 2 is a schematic flowchart of a method that is for executing a deduction service and that is applied to an NFC card reader according to this disclosure;
FIG. 3 is a schematic diagram of interaction between parties participating in a deduction service according to this disclosure;
FIG. 4 is a schematic flowchart of a method for manufacturing an NFC card according to this disclosure;
FIG. 5 is a schematic diagram of interaction in a process of manufacturing an NFC card according to this disclosure;
FIG. 6 is a schematic diagram of an architecture of a system for executing a deduction service according to this disclosure;
FIG. 7 is a schematic diagram of an apparatus that is for executing a deduction service and that is used in a service platform according to this disclosure;
FIG. 8 is a schematic diagram of an apparatus that is for executing a deduction service and that is used in an NFC card reader according to this disclosure;
FIG. 9 is a schematic diagram of an apparatus for manufacturing an NFC card according to this disclosure; and
FIG. 10 is a schematic diagram of an electronic device corresponding to FIG. 1 according to this disclosure.

### DETAILED DESCRIPTION

Currently, near field communication (Near Field Communication, NFC) payment is rapidly popularized, and more merchants have an NFC machine. In this application, a simple, efficient, and secure payment method is developed based on a feature of physical contact of NFC, to resolve daily consumption of a particular group such as the elderly or children, and provide security and convenience for a guardian in a small amount payment scenario such as management of living expenses of the particular group.

To make the objectives, technical solutions, and advantages of this disclosure clearer, the technical solutions of this disclosure will be clearly and completely described below with reference to embodiments of this disclosure and corresponding accompanying drawings. It is clear that the described embodiments are only some embodiments rather than all the embodiments of this disclosure. All other embodiments obtained by those of ordinary skill in the art based on the embodiments of this disclosure without creative efforts shall fall within the protection scope of this disclosure.

The technical solutions provided in the embodiments of this disclosure are described in detail below with reference to the accompanying drawings.

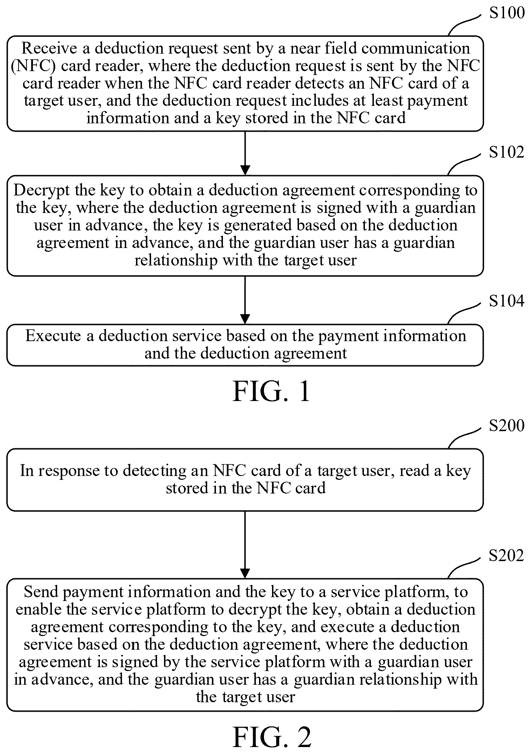

FIG. 1 is a schematic flowchart of a method that is for executing a deduction service and that is applied to a service platform according to this disclosure. The method includes the following steps.

S 100: Receive a deduction request sent by a near field communication (NFC) card reader, wherein the deduction request is sent by the NFC card reader when the NFC card reader detects an NFC card of a target user, and the deduction request includes at least payment information and a key stored in the NFC card.

In this disclosure, execution means configured to implement the method for executing a deduction service may refer to a specified device disposed in a service platform, such as a server. For ease of description, only an example in which the execution means is a server is used in this disclosure to describe the method for executing a deduction service provided in this disclosure.

A main service object of the method for executing a deduction service provided in this disclosure is the target user such as an elderly person or a child that has inconvenience in using a mobile device to perform mobile payment. The NFC card, instead of the mobile device, is provided for the target user to perform mobile payment, and the service platform completes the deduction service on an account provided by a guardian user that completes signing in advance. It should be noted that the NFC card involved in this method is a physical card rather than an electronic card.

Based on the foregoing idea, in this method, a procedure of executing the deduction service begins when the target user having the NFC card swipes, on the NFC card reader deployed by a merchant, the NFC card to perform mobile payment. In response to the card swiping operation performed the target user by using the NFC card, the card reader of the merchant sends the deduction request to the service platform, and correspondingly, the service platform receives the deduction request.

The deduction request sent by the NFC card reader includes at least the payment information and the key. When detecting the NFC card, the NFC card reader reads the key included in the NFC card. Generally, the NFC card reader does not integrate a function of decrypting the key. Therefore, the key is included in the deduction request to be sent to the service platform. In addition, the NFC card reader may add the necessary payment information to the deduction request for sending. The payment information may usually include information such as a payment amount that needs to be deducted for the target user in a current transaction, and a merchant account for the merchant to receive money. All the information may be set by the merchant on the NFC card reader or an electronic device connected to the NFC card reader.

S102: Decrypt the key to obtain a deduction agreement corresponding to the key, wherein the deduction agreement is signed with the guardian user in advance, the key is generated based on the deduction agreement in advance, and the guardian user has a guardian relationship with the target user.

After receiving the key, the service platform performs a corresponding decryption operation on the key. Because the key is generated by the service platform, normally, only the service platform can decrypt the key. The deduction agreement corresponding to the key can be found by decrypting the key.

Before this method is performed, the guardian user needs to sign the deduction agreement with the service platform. The deduction agreement is used to state that the guardian user authorizes the service platform to perform a deduction operation by using the account of the guardian user. The guardian user has the guardian relationship with the target user. In other words, the guardian user may be a guardian of the target user. After the deduction agreement is signed, the service platform generates, based on the signed deduction agreement, the key corresponding to the deduction agreement. Keys generated for different deduction agreements are all different. In other words, the corresponding deduction agreement can be accurately locked based on the generated key.

When the service platform signs the deduction agreement with the guardian user in advance, specifically, a deduction account selected by the guardian user and a deduction limit set by the guardian user may be determined in response to receiving a signing request initiated by the guardian user; a deduction agreement is generated based on the deduction account and the deduction limit, and the deduction agreement is sent to the guardian user; and the deduction agreement is signed with the guardian user in response to that the guardian user determines to sign the deduction agreement.

When the target user performs consumption, payment is performed by the account of the guardian user. Execution of this process is execution of the deduction service. When the service platform executes this process, in other words, a process of invoking the account of the guardian user for payment instead, the service platform needs to obtain permission of the guardian user in advance. Therefore, it is not difficult to understand that, that the service platform signs with the guardian user is a process of obtaining the permission of the guardian user.

When the guardian user intends to transact the deduction service for the target user, the guardian user may initiate the signing request to the service platform by using a terminal device of the guardian user, for example, a device such as a mobile phone or a computer, and by using application software or an applet provided by the service platform. After receiving the signing request initiated by the user, the service platform invokes a corresponding function, executes a pre-designed procedure, and signs with the guardian user. In a signing process, the guardian user needs to provide an account used to perform payment instead of the target user, that is, the deduction account, and set the deduction limit allowed during deduction.

Setting of the deduction limit may include a single transaction limit, a daily limit, a weekly limit, a monthly limit, and the like. In the method for executing a deduction service provided in this disclosure, a main consumption scenario of the oriented target user, to be specific, a particular group such as the elderly or children, is daily small-amount consumption, for example, purchase of life necessities such as rice, groceries, and commodities, or use of pocket money by children. The deduction limit is set, so that a huge amount of deduction that is not supposed to occur and that is caused due to malicious deception of a merchant or a misoperation when the target user performs payment through card swiping can be effectively avoided, thereby better protecting interests of the target user.

After obtaining information about the deduction account and the deduction limit that are selected and set by the guardian user, the service platform may generate the deduction agreement based on the information. Certainly, in addition to including the deduction account and the deduction limit, the deduction agreement may further include a rule, a clause, and the like that are preset by the service platform and related to the deduction service. The generated deduction agreement is sent to the guardian user, to solicit permission of the guardian user. The guardian user may browse the deduction agreement by using a terminal of the guardian user, and choose to agree to sign on the terminal after determining that content in the deduction agreement is accurate and incorrect and conforms to an intention of the guardian user. After receiving a signal indicating that the guardian user agrees to sign, the service platform validates the deduction agreement and preserves the complete deduction agreement. On the contrary, if the guardian user does not approve the content in the deduction agreement, the guardian user may select a disagreeing option on the terminal when browsing the deduction agreement, terminate the signing, and cancel use of the deduction service. Certainly, even after the signing, the guardian user may cancel the signing at any time, and the service platform stops the corresponding deduction service accordingly.

After the signing with the guardian user is completed in advance, generation of the key also needs to be completed in advance. When the key is generated based on the deduction agreement, specifically, an agreement number corresponding to the deduction agreement may be created; and encryption processing is performed on the agreement number, to obtain a key of the agreement number. Based on this, when the key is decrypted, to obtain the deduction agreement corresponding to the key, specifically, the key may be decrypted, to obtain the agreement number; and the deduction agreement corresponding to the agreement number is determined.

In this method, in addition to conventional authentication, a function of the key further requires the service provider to find the corresponding deduction agreement when receiving the key. Therefore, the key needs to carry related information of the deduction agreement. Because the deduction agreement includes a large amount of content, a key obtained by directly converting the deduction agreement according to an encoding rule is long, and is inconvenient to use. Therefore, to resolve this problem, in this method, when the key is generated, the agreement number is first created for the deduction agreement, and a correspondence is established between the agreement number and the deduction agreement. The created agreement number is unique, in other words, different deduction agreements respectively correspond to different agreement numbers, so that the unique corresponding deduction agreement can be locked based on the agreement number. In this case, the required key can be obtained by only performing encryption processing on the agreement number. In comparison with the deduction agreement that includes a large quantity of texts and a large amount of content, the agreement number is usually a short character string including letters, numbers, and symbols. Therefore, a length of the key obtained by converting the agreement number is also short, thereby improving convenience of subsequent use.

In the foregoing manner, when receiving the deduction request sent by the NFC card reader and decrypting the key carried in the deduction request, the service platform first obtains the agreement number after decryption, and then finds the corresponding deduction agreement based on the agreement number.

S104: Execute the deduction service based on the payment information and the deduction agreement.

Finally, the service platform may execute the deduction service based on the payment information included in the received deduction request and the deduction agreement found after the key is decrypted. As described in step S100, the payment information may generally include at least the merchant account and the payment amount. When the deduction service is executed, specifically, the deduction account included in the deduction agreement may be determined; and the deduction service is completed based on the deduction account, the payment amount, and the merchant account.

The deduction agreement includes the deduction account set when the guardian user signs in advance, in other words, an account by which payment is actually performed during the deduction. The payment information includes the payment amount that needs to be deducted in the current transaction, and the merchant account. When performing the deduction operation, the service provider transfers the payment amount from the deduction account to the merchant account, to complete the deduction service.

In addition, when the deduction service is executed, whether the deduction does not exceed the deduction limit also needs to be considered. Specifically, the deduction limit included in the deduction agreement may be determined; and the deduction service is canceled when the payment amount is greater than the deduction limit; or the payment amount is transferred from the deduction account to the merchant account when the payment amount is not greater than the deduction limit, to complete the deduction service.

It is not difficult to understand that the deduction limit is a maximum consumption amount, set by the guardian user, when the target user performs consumption by using the NFC card. When the deduction service is executed, whether the payment amount is not greater than the deduction limit may be preferentially determined. If yes, deduction is normally performed; otherwise, the deduction is canceled. Certainly, regardless of whether deduction is successfully performed, information about the current transaction may be sent to the guardian user, so that the guardian user better manages consumption performed by the target user by using the NFC card. Further, the deduction limit may include a single limit, a daily limit, a weekly limit, a monthly limit, and the like. The foregoing content describes a specific method of detecting whether the payment amount exceeds the single limit during each time of consumption. By analogy, for the deduction limits such as the daily limit, the weekly limit, and the monthly limit, same logic may be used, provided that the single payment amount is replaced with an accumulated payment amount in a corresponding time span. Details are not described in this disclosure again.

When deduction is performed by using the method for executing a deduction service provided in this disclosure, after the guardian user signs the deduction agreement with the service provider, the target user may perform mobile payment by using the physical NFC card instead of an electronic device such as a mobile device, and the service provider operates the account of the guardian user to perform payment, thereby implementing deduction. Use of this method can help a particular group that has inconvenience in operating or holding a mobile device enjoy convenience of mobile payment, and can protect the particular group from being deceived by a malicious user or merchant for properties, so that experience of the particular group during daily consumption is greatly improved.

The foregoing describes the method that is for executing a deduction service and that is applied to the service platform in this disclosure. Based on a same concept, as shown in FIG. 2, this disclosure further provides a method that is for executing a deduction service and that is applied to an NFC card reader of a merchant.

FIG. 2 is a schematic flowchart of a method that is for executing a deduction service and that is applied to an NFC card reader according to this disclosure. The method includes the following steps.

S200: In response to detecting an NFC card of a target user, read a key stored in the NFC card.

S202: Send payment information and the key to a service platform, to enable the service platform to decrypt the key, obtain a deduction agreement corresponding to the key, and execute the deduction service based on the deduction agreement, wherein the deduction agreement is signed by the service platform with a guardian user in advance, and the guardian user has a guardian relationship with the target user.

The method that is for executing a deduction service and that is applied to the NFC card reader provided in this disclosure is an execution method corresponding to the method that is for executing a deduction service and that is applied to the service platform. Specific content of the execution method is already described in detail in the method that is for executing a deduction service and that is applied to the service platform provided in this disclosure, and details are not described in this disclosure again.

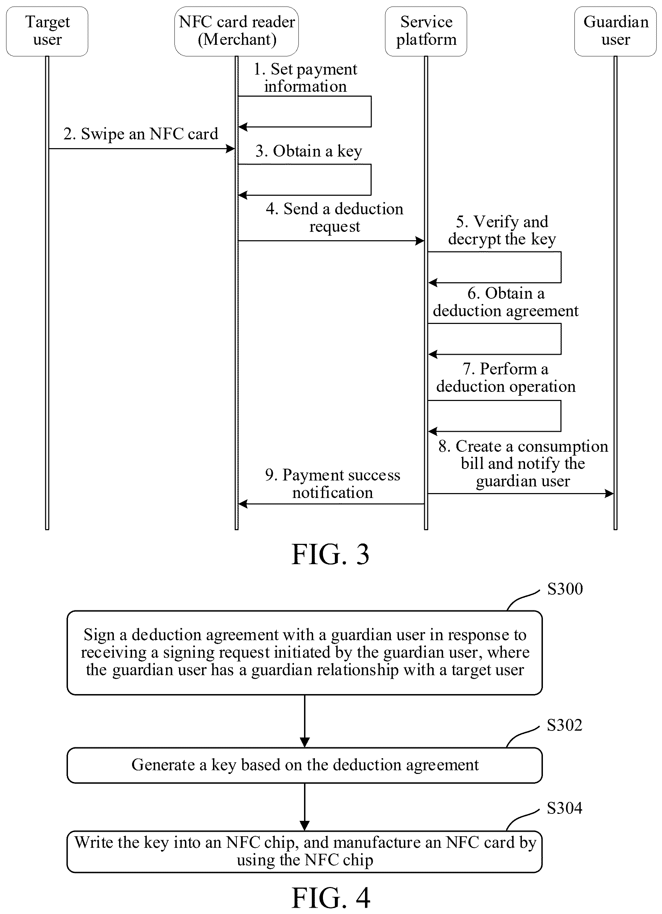

With reference to the methods that are for executing a deduction service and that are respectively applied to the service platform and the NFC card reader provided in this disclosure, an entire procedure of the method for executing a deduction service is completed reorganized by using FIG. 3 as an example. FIG. 3 is a schematic diagram of interaction between parties participating in a deduction service according to this disclosure. As shown in FIG. 3, after a target user selects a product that needs to be purchased, a merchant first sets payment information on an NFC card reader. Generally, a merchant account may be preset and does not need to be set again if the merchant account is not changed subsequently, and a payment amount is set on site based on the product selected by the target user. After the merchant completes setting, the target user may swipe an NFC card on the NFC card reader to start payment. After reading a key included in the NFC card, the NFC card reader adds the key and the payment information to a deduction request and sends the deduction request to a service platform. After decrypting the key to obtain a corresponding deduction agreement, the service platform may perform a deduction operation, and respectively send a consumption bill to a guardian user and send a payment success notification to the merchant after completing the deduction operation, to complete the deduction service.

The foregoing describes the method for executing a deduction service in this disclosure. Based on a same concept, as shown in FIG. 4, this disclosure further provides a corresponding method for manufacturing an NFC card.

FIG. 4 is a schematic flowchart of a method for manufacturing an NFC card according to this disclosure. The manufactured NFC card is configured to enable a target user to perform mobile payment by using the method for executing a deduction service provided in this disclosure. The method specifically includes the following steps.

S300: Sign a deduction agreement with a guardian user in response to receiving a signing request initiated by the guardian user, where the guardian user has a guardian relationship with the target user.

S302: Generate a key based on the deduction agreement.

S304: Write the key into an NFC chip, and manufacture the NFC card by using the NFC chip.

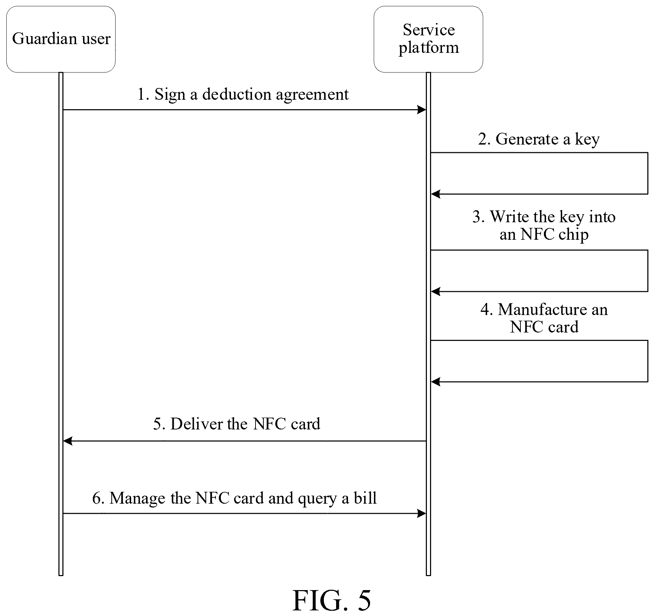

The foregoing method for manufacturing an NFC card may be used to complete manufacturing of the NFC card used in the method for executing a deduction service provided in this disclosure. With reference to the method for executing a deduction service and the method for manufacturing an NFC card that are provided in this disclosure, a process of manufacturing an NFC card is described by using FIG. 5 as an example.

FIG. 5 is a schematic diagram of interaction in a process of manufacturing an NFC card according to this disclosure. As shown in FIG. 5, a guardian user first needs to sign a deduction agreement with a service platform. After signing is completed, the service platform generates, based on the deduction agreement, a key that can be used to uniquely lock the deduction agreement, and writes the key into an NFC chip. An NFC card is manufactured by using the NFC chip into which the key is written, so that manufacturing of the NFC card can be completed. Subsequently, the service platform may deliver the NFC card to a target user; or deliver the NFC card to the guardian user, so that the guardian user delivers the NFC card to the target user for use. In addition, in a valid period of the deduction agreement, the guardian user may view consumption details of the NFC card at any time and manage the NFC card, for example, adjust a deduction limit or enable and disable the NFC card, by using application software or an applet provided by the service platform.

In comparison with a mobile device, in this method, a manner in which the NFC card is used to help a particular group such as the elderly or children to implement mobile payment has benefits in a plurality of aspects. First, for the particular group that does not have the mobile device, regardless of whether the particular group does not want to use the mobile device or cannot use the mobile device, daily lives of the particular group may not need the mobile device. In consideration of a high price of the mobile device, it is unnecessary to specially purchase the mobile device for mobile payment only. In comparison with the mobile device, the NFC card provided in this method is also convenient to carry, can be equipped with only ten Yuan, has a very favored price, and does not cause an extra overhead burden.

In addition, for the particular group that lacks use knowledge of the mobile device, payment by using the mobile device further requires a high learning threshold. Currently, a mainstream mobile payment manner requires a user to install payment software on the mobile device, and perform operations such as opening a QR code and scanning a QR code of another party in the payment software. These operations all require learning costs, and these learning costs are not low for the particular group. However, when the NFC card is used, the card only needs to be put near the NFC card reader, and payment can be directly completed without any other operation, thereby greatly reducing learning costs for the particular group to enjoy mobile payment.

Finally, the particular group that lacks the use knowledge of the mobile device usually does not have awareness of preventing behaviors such as various telecommunication fraud. If the particular group encounters various telecommunication fraud in a process of using the mobile device, it is difficult to ensure that the particular group is not deceived and does not suffer a loss. Therefore, when payment is performed by using the NFC card, the particular group can be further protected from threats of various telecommunication fraud behaviors, thereby protecting interests of the particular group to the greatest extent.

The foregoing describes the method for executing a deduction service and the method for manufacturing an NFC card that are provided in this disclosure. Based on a same concept, this disclosure further provides a corresponding system for executing a deduction service, an apparatus for executing a deduction service, and an apparatus for manufacturing an NFC card.

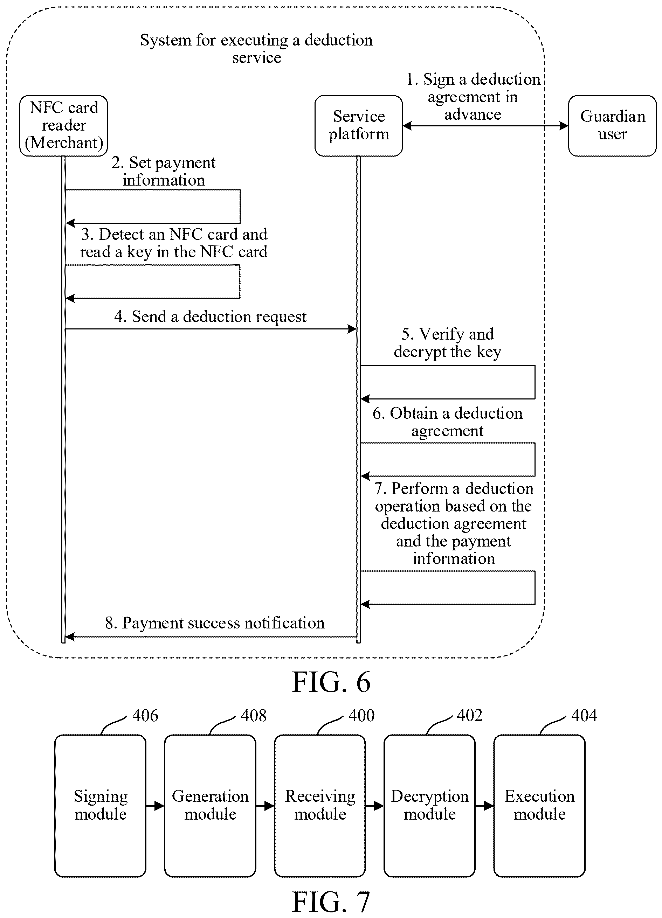

FIG. 6 is a schematic diagram of a system structure of a system for executing a deduction service according to this disclosure. The system includes an NFC card reader and a service platform.

The NFC card reader is configured to detect an NFC card of a target user, read a key included in the NFC card, and send payment information and the key to the service platform.

The service platform is configured to sign a deduction agreement with a guardian user in advance, generate the key based on the deduction agreement in advance, receive the payment information and the key that are sent by the NFC card reader, decrypt the key to obtain the deduction agreement, and execute the deduction service based on the payment information and the deduction agreement.

The guardian user has a guardian relationship with the target user, and information carried in the NFC card includes the key.

The system for executing a deduction service provided in this disclosure is a system obtained with reference to the method that is for executing a deduction service and that is applied to the service platform and the method that is for executing a deduction service and that is applied to the NFC card reader that are provided in this disclosure, and a main function achieved by the system is already described in detail in the method for executing a deduction service provided in this disclosure. Details are not described in this disclosure again.

FIG. 7 is a schematic diagram of an apparatus that is for executing a deduction service and that is used in a service platform according to this disclosure. The apparatus includes:
a receiving module 400 configured to receive a deduction request sent by a near field communication (NFC) card reader, wherein the deduction request is sent by the NFC card reader when the NFC card reader detects an NFC card of a target user, and the deduction request includes at least payment information and a key stored in the NFC card;
a decryption module 402 configured to decrypt the key to obtain a deduction agreement corresponding to the key, wherein the deduction agreement is signed with a guardian user in advance, the key is generated based on the deduction agreement in advance, and the guardian user has a guardian relationship with the target user; and
an execution module 404 configured to execute the deduction service based on the payment information and the deduction agreement.

Optionally, the apparatus further includes a signing module 406 configured to determine, in response to receiving a signing request initiated by the guardian user, a deduction account selected by the guardian user and a deduction limit set by the guardian user; generate a deduction agreement based on the deduction account and the deduction limit, and send the deduction agreement to the guardian user; and sign the deduction agreement with the guardian user in response to that the guardian user determines to sign the deduction agreement.

Optionally, the apparatus further includes a generation module 408 configured to create an agreement number corresponding to the deduction agreement; and perform encryption processing on the agreement number, to obtain a key of the agreement number.

The decryption module 402 is specifically configured to decrypt the key to obtain the agreement number; and determine the deduction agreement corresponding to the agreement number.

Optionally, the payment information includes at least a merchant account and a payment amount.

The execution module 404 is specifically configured to determine the deduction account included in the deduction agreement; and complete the deduction service based on the deduction account, the payment amount, and the merchant account.

Optionally, the execution module 404 is configured to determine the deduction limit included in the deduction agreement; and cancel the deduction service when the payment amount is greater than the deduction limit; or transfer the payment amount from the deduction account to the merchant account when the payment amount is not greater than the deduction limit, to complete the deduction service.

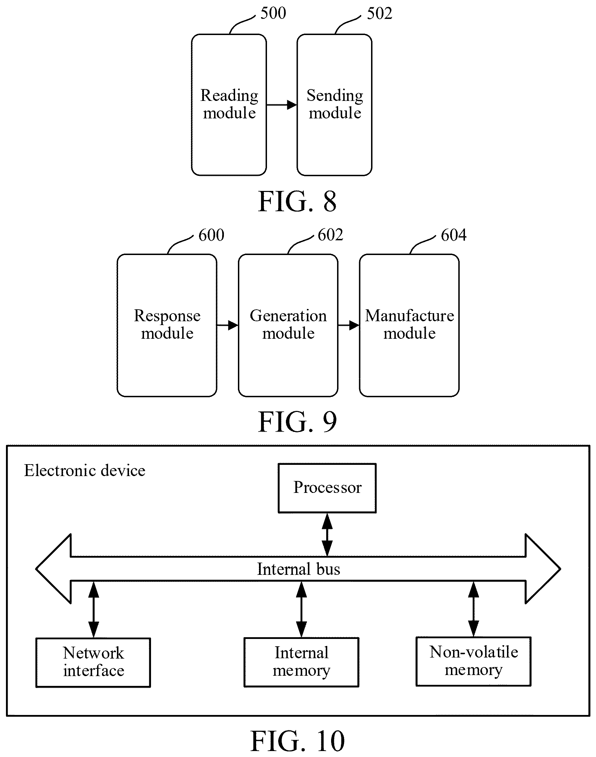

FIG. 8 is a schematic diagram of an apparatus that is for executing a deduction service and that is used in an NFC card reader according to this disclosure. The apparatus includes:
a reading module 500 configured to read, in response to detecting an NFC card of a target user, a key stored in the NFC card; and
a sending module 502 configured to send payment information and the key to a service platform, to enable the service platform to decrypt the key, obtain a deduction agreement corresponding to the key, and execute the deduction service based on the deduction agreement, wherein the deduction agreement is signed by a service platform with the guardian user in advance, and the guardian user has a guardian relationship with the target user.

FIG. 9 is a schematic diagram of an apparatus for manufacturing an NFC card according to this disclosure. The apparatus includes:
a response module 600 configured to sign a deduction agreement with a guardian user in response to receiving a signing request initiated by the guardian user, wherein the guardian user has a guardian relationship with the target user;
a generation module 602 configured to generate a key based on the deduction agreement; and
a manufacture module 604 configured to write the key into an NFC chip, and manufacture the NFC card by using the NFC chip.

This disclosure further provides a computer-readable storage medium. The storage medium stores a computer program. The computer program may be used to perform the method for executing a deduction service provided in FIG. 1 and/or FIG. 2, and/or the method for manufacture the NFC card provided in FIG. 4.

This disclosure further provides an electronic device. FIG. 10 is a schematic diagram of a structure of an electronic device corresponding to any one of FIG. 1, FIG. 2, and FIG. 4.. As shown in FIG. 10, from a perspective of hardware, the electronic device includes a processor, an internal bus, a network interface, an internal memory, and a non-volatile memory, and certainly may further include hardware required by another service. The processor reads a corresponding computer program from the non-volatile memory into the internal memory and run the computer program, to implement the method for executing a deduction service in FIG. 1 and/or FIG. 2, and/or the method for manufacture the NFC card in FIG. 4. Certainly, in addition to a software implementation, this disclosure does not exclude another implementation, for example, logic devices or a software-hardware combination. In other words, execution bodies of the following processing procedures are not limited to logic units and may alternatively be hardware or logic devices.

In the 1990s, improvements in a technology can be clearly categorized as hardware improvements (for example, improvements to a circuit structure such as a diode, a transistor, a switch, etc.) and software improvements (improvements to a method procedure). However, with the development of technology, improvements of many method procedures can be considered as direct improvements of hardware circuit structures. Designers almost all program an improved method procedure to a hardware circuit, to obtain a corresponding hardware circuit structure. Therefore, it does not mean that the improvement of a method procedure cannot be implemented by using a hardware entity module. For example, a programmable logic device (Programmable Logic Device, PLD) (such as a field programmable gate array (Field Programmable Gate Array, FPGA)) is a type of integrated circuit whose logic function is determined by a user by programming the device. The designers perform voluntary programming to "integrate" a digital system into a single PLD without requiring a chip manufacturer to design and prepare a dedicated integrated circuit chip. In addition, instead of making an integrated circuit chip manually, the programming is mostly implemented by using "logic compiler (logic compiler)" software, which is similar to the software compiler used to write programs. Original code before compiling is also written in a specific programming language, which is referred to as hardware description language (Hardware Description Language, HDL). There are many types of HDLs, such as ABEL (Advanced Boolean Expression Language), AHDL (Altera Hardware Description Language), Confluence, CUPL (Cornell University Programming Language), HDCal, JHDL (Java Hardware Description Language), Lava, Lola, MyHDL, PALASM, RHDL (Ruby Hardware Description Language), etc. Currently, VHDL (Very-High-Speed Integrated Circuit Hardware Description Language) and Verilog are most commonly used. A person skilled in the art should also understand that as long as a method procedure is logically programmed and then programmed to an integrated circuit by using the foregoing hardware description languages, a hardware circuit that implements the logical method procedure can be easily obtained.

The controller can be implemented in any suitable manner. For example, the controller can take the form of, for example, a microprocessor or processor and a computer-readable medium storing computer-readable program code (for example, software or firmware) executable by the processor, a logic gate, a switch, an application-specific integrated circuit (ASIC), a programmable logic controller, and an embedded microcontroller. Examples of the controller include, but are not limited to, the following microcontrollers: ARC 625D, Atmel AT91SAM, Microchip PIC18F26K20, and Silicone Labs C8051F320. The memory controller can also be implemented as part of the memory control logic. A person skilled in the art will also appreciate that, in addition to implementing, by logically programming the method steps, the controller in the form of pure computer-readable program code, it is also possible to implement the controller in the form of a logic gate, switch, application-specific integrated circuit, programmable logic controller, and embedded microcontroller and other forms to achieve the same function. Therefore, such a controller can be considered as a hardware component and apparatuses included therein for implementing various functions can also be considered as structures inside the hardware component. Alternatively, apparatuses configured to implement various functions can be considered as both software modules implementing the method and structures inside the hardware component.

The system, the apparatus, the module or the unit described in the foregoing embodiments may be specifically implemented by a computer chip or an entity, or implemented by a product having a certain function. A typical implementation device is a computer. Specifically, the computer may be, for example, a personal computer, a laptop computer, a cellular phone, a camera phone, a smartphone, a personal digital assistant, a media player, a navigation device, an email device, a game console, a tablet computer, a wearable device, or a combination of any of the devices.

For ease of description, when the apparatus is described, the apparatus is divided into units according to functions, which are separately described. Certainly, during implementation of this disclosure, the functions of the units may be implemented in the same piece of or a plurality of pieces of software and/or hardware.

A person skilled in the art should understand that the embodiments of this disclosure may be provided as a method, a system, or a computer program product. Therefore, this disclosure may use a form of hardware-only embodiments, software-only embodiments, or embodiments with a combination of software and hardware. Moreover, this disclosure may use a form of a computer program product that is implemented on one or more computer-usable storage media (including but not limited to a disk memory, a CD-ROM, an optical memory, and the like) that include computer-usable program code.

This disclosure is described with reference to the flowcharts and/or block diagrams of the method, the device (system), and the computer program product according to the embodiments of this disclosure. It should be understood that computer program instructions can implement each procedure and/or block in the flowcharts and/or block diagrams and a combination of procedures and/or blocks in the flowcharts and/or block diagrams. These computer program instructions may be provided to a general-purpose computer, a special-purpose computer, an embedded processor, or a processor of another programmable data processing device to generate a machine, so that an apparatus configured to implement functions specified in one or more procedures in the flowcharts and/or one or more blocks in the block diagrams is generated by using instructions executed by the computer or the processor of another programmable data processing device.

These computer program instructions may alternatively be stored in a computer-readable memory that can instruct a computer or another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

These computer program instructions may further be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

In a typical configuration, a computer includes one or more processors (such as CPUs), an input/output interface, a network interface, and an internal memory.

The internal memory may include a form such as a volatile memory, a random access memory (RAM), and/or a non-volatile memory such as a read-only memory (ROM) or a flash memory (flash RAM) in a computer-readable medium. The internal memory is an example of the computer-readable medium.

The computer-readable medium includes a non-volatile medium and a volatile medium, a removable medium and a non-removable medium, which may implement storage of information by using any method or technology. The information may be a computer-readable instruction, a data structure, a program module, or other data. Examples of a computer storage medium include but are not limited to a phase-change memory (PRAM), a static random access memory (SRAM), a dynamic random access memory (DRAM), other type of random access memory (RAM), a read-only memory (ROM), an electrically erasable programmable read-only memory (EEPROM), a flash memory or other memory technology, a compact disc read-only memory (CD-ROM), a digital versatile disc (DVD) or other optical storage, a cassette tape, a magnetic tape, a magnetic disk storage or other magnetic storage device, or any other non-transmission medium, which may be configured to store information accessible by a computing device. According to limitations of this disclosure, the computer-readable medium does not include transitory computer-readable media (transitory media), such as a modulated data signal and a modulated carrier.

It should be further noted that the terms "include", "comprise", or any variants thereof are intended to cover a non-exclusive inclusion. Therefore, a process, method, article, or device that includes a series of elements not only includes such elements, but also includes other elements not specified expressly, or may include inherent elements of the process, method, article, or device. Unless otherwise specified, an element limited by "include a/an..." does not exclude other same elements existing in the process, the method, the article, or the device that includes the element.

A person skilled in the art should understand that the embodiments of this disclosure may be provided as a method, a system, or a computer program product. Therefore, this disclosure may use a form of hardware-only embodiments, software-only embodiments, or embodiments with a combination of software and hardware. Moreover, this disclosure may use a form of a computer program product that is implemented on one or more computer-usable storage media (including but not limited to a disk memory, a CD-ROM, an optical memory, and the like) that include computer-usable program code.

This disclosure can be described in the general context of computer-executable instructions executed by a computer, for example, program modules. Generally, the program module includes a routine, a program, an object, a component, a data structure, and the like for executing a particular task or implementing a particular abstract data type. This disclosure may also be implemented in a distributed computing environment in which tasks are performed by remote processing devices connected by using a communication network. In a distributed computing environment, the program module may be located in both local and remote computer storage media including storage devices.

The embodiments of this disclosure are all described in a progressive manner, for same or similar parts in the embodiments, refer to these embodiments, and descriptions of each embodiment focus on a difference from other embodiments. Especially, a system embodiment is basically similar to a method embodiment, and therefore is described briefly; for related parts, refer to partial descriptions in the method embodiment.

The foregoing descriptions are merely the embodiments of this disclosure, and are not intended to limit this disclosure. For a person skilled in the art, various modifications and changes may be made to this disclosure. Any modifications, equivalent replacements, and improvements made within the spirit and principle of this disclosure shall fall within the scope of the claims of this disclosure.

## Claims

1. A method for executing a deduction service, applied to a service platform, the method comprising:
receiving a deduction request sent by a near field communication (NFC) card reader, wherein the deduction request is sent by the NFC card reader when the NFC card reader detects an NFC card of a target user, and the deduction request comprises at least payment information and a key stored in the NFC card;
decrypting the key to obtain a deduction agreement corresponding to the key, wherein the deduction agreement is signed with a guardian user in advance, the key is generated based on the deduction agreement in advance, and the guardian user has a guardian relationship with the target user; and
executing the deduction service based on the payment information and the deduction agreement.

2. The method according to claim 1, wherein signing a deduction agreement with a guardian user in advance comprises:
determining, in response to receiving a signing request initiated by the guardian user, a deduction account selected by the guardian user and a deduction limit set by the guardian user;
generating a deduction agreement based on the deduction account and the deduction limit, and sending the deduction agreement to the guardian user; and
signing the deduction agreement with the guardian user in response to that the guardian user determines to sign the deduction agreement.

3. The method according to claim 1, wherein generating a key based on the deduction agreement in advance comprises:
creating an agreement number corresponding to the deduction agreement; and
performing encryption processing on the agreement number, to obtain a key of the agreement number; and
the decrypting the key to obtain a deduction agreement corresponding to the key comprises:
decrypting the key to obtain the agreement number; and
determining the deduction agreement corresponding to the agreement number.

4. The method according to claim 2, wherein the payment information comprises at least a merchant account and a payment amount; and
the executing the deduction service based on the deduction agreement and the payment information comprises:
determining the deduction account comprised in the deduction agreement; and
completing the deduction service based on the deduction account, the payment amount, and the merchant account;
preferably, completing the deduction service based on the deduction account, the payment amount, and the merchant account comprises:
determining the deduction limit comprised in the deduction agreement; and
canceling the deduction service when the payment amount is greater than the deduction limit; or
transferring the payment amount from the deduction account to the merchant account when the payment amount is not greater than the deduction limit, to complete the deduction service.

5. A method for executing a deduction service, applied to an NFC card reader, the method comprising:
in response to detecting an NFC card of a target user, reading a key stored in the NFC card; and
sending payment information and the key to a service platform, to enable the service platform to decrypt the key, obtain a deduction agreement corresponding to the key, and execute the deduction service based on the deduction agreement, wherein the deduction agreement is signed by the service platform with a guardian user in advance, and the guardian user has a guardian relationship with the target user.

6. A method for manufacturing an NFC card, wherein the NFC card is configured to enable a target user to perform mobile payment by using the method for executing a deduction service according to any one of claims 1 to 4, the method comprising:
signing a deduction agreement with a guardian user in response to receiving a signing request initiated by the guardian user, wherein the guardian user has a guardian relationship with the target user;
generating a key based on the deduction agreement; and
writing the key into an NFC chip, and manufacturing the NFC card by using the NFC chip.

7. A system for executing a deduction service, wherein the system comprises an NFC card reader and a service platform;
the NFC card reader is configured to detect an NFC card of a target user, read a key comprised in the NFC card, and send payment information and the key to the service platform;
and
the service platform is configured to sign a deduction agreement with a guardian user in advance, generate the key based on the deduction agreement in advance, receive the payment information and the key that are sent by the NFC card reader, decrypt the key to obtain the deduction agreement, and execute the deduction service based on the payment information and the deduction agreement, wherein
the guardian user has a guardian relationship with the target user, and information carried in the NFC card comprises the key.

8. An apparatus for executing a deduction service, the apparatus comprising:
a receiving module, configured to receive a deduction request sent by a near field communication (NFC) card reader, wherein the deduction request is sent by the NFC card reader when the NFC card reader detects an NFC card of a target user, and the deduction request comprises at least payment information and a key stored in the NFC card;
a decryption module, configured to decrypt the key to obtain a deduction agreement corresponding to the key, wherein the deduction agreement is signed with a guardian user in advance, the key is generated based on the deduction agreement in advance, and the guardian user has a guardian relationship with the target user; and
an execution module, configured to execute the deduction service based on the payment information and the deduction agreement.

9. The apparatus according to claim 8, wherein the apparatus further comprises a signing module, configured to determine, in response to receiving a signing request initiated by the guardian user, a deduction account selected by the guardian user and a deduction limit set by the guardian user; generate a deduction agreement based on the deduction account and the deduction limit, and send the deduction agreement to the guardian user; and sign the deduction agreement with the guardian user in response to that the guardian user determines to sign the deduction agreement.

10. The apparatus according to claim 8, wherein the apparatus further comprises a generation module, configured to create an agreement number corresponding to the deduction agreement; and perform encryption processing on the agreement number, to obtain a key of the agreement number; and
the decryption module is configured to decrypt the key to obtain the agreement number; and determine the deduction agreement corresponding to the agreement number.

11. The apparatus according to claim 9, wherein the payment information comprises at least a merchant account and a payment amount; and
the execution module is configured to determine the deduction account comprised in the deduction agreement; and complete the deduction service based on the deduction account, the payment amount, and the merchant account;
preferably, the execution module is configured to determine the deduction limit comprised in the deduction agreement; and cancel the deduction service when the payment amount is greater than the deduction limit; or transfer the payment amount from the deduction account to the merchant account when the payment amount is not greater than the deduction limit, to complete the deduction service.

12. An apparatus for executing a deduction service, the apparatus comprising:
a reading module, configured to read, in response to detecting an NFC card of a target user, a key stored in the NFC card; and
a sending module, configured to send payment information and the key to a service platform, to enable the service platform to decrypt the key, obtain a deduction agreement corresponding to the key, and execute the deduction service based on the deduction agreement, wherein the deduction agreement is signed by the service platform with a guardian user in advance, and the guardian user has a guardian relationship with the target user.

13. An apparatus for manufacturing an NFC card, wherein the NFC card is configured to enable a target user to perform mobile payment by using the method for executing a deduction service according to any one of claims 1 to 5, the apparatus comprising:
a response module, configured to sign a deduction agreement with a guardian user in response to receiving a signing request initiated by the guardian user, wherein the guardian user has a guardian relationship with the target user;
a generation module, configured to generate a key based on the deduction agreement; and
a manufacture module, configured to write the key into an NFC chip, and manufacture the NFC card by using the NFC chip.

14. A computer-readable storage medium, wherein the storage medium stores a computer program, and the computer program, when being executed by a processor, implements the method according to any one of claims 1 to 6.

15. A electronic device, comprising a memory, a processor, and a computer program stored in the memory and executable on the processor, wherein the processor, when executing the program, implements the method according to any one of claims 1 to 6.
